Europäisches Patentamt

European Patent Office

Office européen des brevets

(11) Numéro de publication: **0 253 705**
A2

# (12) DEMANDE DE BREVET EUROPEEN

(21) Numéro de dépôt: **87401476.4**

(22) Date de dépôt: **26.06.87**

(51) Int. Cl.⁴: **A 23 K 1/00,** A 23 K 1/16,
A 23 K 1/02

(30) Priorité: **30.06.86 FR 8609810**

(43) Date de publication de la demande: **20.01.88**
**Bulletin 88/3**

(84) Etats contractants désignés: **BE DE ES FR GB IT NL**

(71) Demandeur: **Tierny, Jean-Benoit, 2, Place de la
Préfecture B.P. 467, F-62028 Arras Cedex (FR)**

(72) Inventeur: **Tierny, Jean-Benoit, 2, Place de la Préfecture
B.P. 467, F-62028 Arras Cedex (FR)**

(54) **Procédé de fabrication d'aliments pour animaux et composé pour l'alimentation animale.**

(57) Procédé de fabrication d'aliments pour animaux caractérisé en ce qu'il consstitue à émulsifier un produit de base contenant de la bétaisse issue de fermentation de mélasse de betterave avec de la matière grasse.

Cette invention répond à un double objectif:
- Augmenter la valeur nutritionnelle du co-produit liquide
  par l'ajout de matières grasses;
- Diminuer les contraintes liées à l'utilisation des matières grasses.

Notre procédé consiste à:
- Brasser du co-produit contenant de la bétaine et de
  la matière grasse sous forme liquide;
- Stabiliser si besoin par ajout d'agent viscosant ou déviscosant.

Notre invention est plus particulièrement destinée à l'alimentation animale. Néanmoins son domaine d'application peut
s'étendre aux industries nécessitant des liants.

0253705

L'invention est relative à un procédé de fabrication d'aliments pour animaux ainsi qu'un composé pour l'alimentation animale selon une mise en oeuvre dudit procédé. Elle trouvera notamment son application dans le domaine de l'élevage scientifique pour assurer une nutrition équilibrée des animaux.

Bien que l'invention ait été plus particulièrement développée pour nourrir les bovins et les porcins, elle pourra facilement être adaptée à toute espèce animale.

Naguère, seule l'alimentation traditionnelle du bétail était pratiquée. Il s'agissait pour cela d'assurer une alimentation collective des animaux placés par exemple en pâture. Des compléments fourragers étaient éventuellement mis à la disposition des troupeaux.

Malheureusement, ce type d'alimentation non contrôlé présente de nombreux inconvénients liés essentiellement à la vie en groupe des bêtes. Le rendement global de l'élevage est diminué en ce sens que de nombreux éléments du bétail consomment plus qu'il ne leur est nécessaire.

Les meilleurs animaux, que ce soit au niveau laitier ou en viande, n'absorbent pas les quantités de nourriture correspondantes à leur besoins, ce qui diminue sensiblement leur production. Alors qu'au contraire, des éléments médiocres en production peuvent absorber une quantité de nourriture largement excédentaire vis-à-vis de leur besoin, d'où une perte.

Le mode de vie du bétail en groupe suit des règles de hiérarchie stricte qui ne permettent pas d'offrir à chaque élément une quantité de nourriture proportionnelle à ses mérites. Dans ces conditions, pour obtenir un niveau de production acceptable, il est nécessaire de fournir à l'ensemble du groupe une alimentation abondante.

D'un point de vue économique, ce système d'élevage tend de plus en plus à être abandonné au profit d'un élevage scientifique dans lequel chaque élément du troupeau est individualisé et perçoit une quantité de nourriture directement en relation avec le niveau de production fourni : exemple, l'alimentation intensive gérée par l'informatique.

L'alimentation traditionnelle étant inadaptée en raison des coûts de revient élevés qu'elle entraîne, les éleveurs industriels se sont mis en quête de produits de substitution susceptibles de fournir à l'animal une nourriture équilibrée.

L'un des premiers facteurs économiques qui a orienté la recherche est le prix de revient de l'aliment de base. A cet égard, il existe actuellement entre autres deux catégories de produits répondant aux impératifs économiques : la mélasse de plantes sucrières telles que la betterave à sucre ou la canne à sucre, et les co-produits liquides de fermentation qui doivent être concentrés.

.Les co-produits de fermentation sont obtenus suite à la fermentation de substrats organiques et, notamment, de mélasses de betteraves, fermentation qui a pour but la fabrication de produits nobles, par exemple : des alcools, des acides aminés ou des levures de panification. Cette fermentation consomme principalement les sucres contenus dans le substrat, les non-sucres sont reconcentrés pour constituer les co-produits liquides de fermentation.

Ces produits liquides ne sont pas exploitables directement en raison de leur trop forte dilution, aussi doit-on passer par une étape d'évaporation pour concentration.

Dans la pratique, les co-produits de fermentation sont concentrés pour atteindre un taux de matière sèche compris entre 60 et 75 %.

Actuellement, selon le processus de fermentation de mélasses et d'extraction du produit noble, on obtient des co-produits qui ont des caractéristiques chimiques différentes.

TABLEAU 1

PRINCIPAUX TYPES DE CO-PRODUITS
********************************

| | PRODUCTIONS FRANCAISES DE VINASSES | | | | ETRANGERES | |
|---|---|---|---|---|---|---|
| | Productions d'Acides Aminés | de Levure au SO4 (NH4) 2 | Centri-fugée | de Distille-rie | Citrique Dépotassifiée au Ca SO4 | A. Glutamique Dépotassifiée NH4 Cl. |
| Matière Sèche | 70 - 75 | 66 - 75 | 65 | 60 - 65 | 70 | 55 - 60 |
| Cendres Brutes | 4 - 6 | 8 - 11,5 | 14 - 20 | 18 - 22 | 12 | 13 |
| Matière Azotée Totale | 45 - 55 | 37,5-45 | 25 | 20 - 25 | 26 | 34 |
| Azoté Ammoniacal | 3,5 | 2,2 | 0,2 | - | 0,5 | 2,7 |
| Potassium | < 0,5 | 2 - 4 | 5 - 7,5 | 8 - 10 | 2,5 | 2 |
| Sodium | 1,2 | 1,5 | 1,5 | 2 | | |
| Soufre (Sulfates) | 1 | 1 | 0,6 | 1 | 0,7 | 0 |
| Calcium | $\simeq$ 0 | 0,1 | 0,1 | 0,1 | 0,6 | 0,2 |
| Phosphore | 0,2 | 0,1 | 0,1 | 0,1 | $\simeq$ 0 | $\simeq$ 0 |

JANVIER 1987

Les co-produits peuvent avoir une composition chimique différente si d'autres substrats organiques que la mélasse de betterave sont employés.

Parmi les non-sucres, un composé azoté synthétisé par la betterave (la Bétaïne) se trouve à une concentration élevée (30g pour 100g de Matières Sèches).

Cette bétaïne, très stable chimiquement, traverse les différentes étapes de la sucrerie et de la fermentation sans modification importante.

Cette stabilité semble conférer à la bétaïne une moindre valeur alimentaire car elle ne rentre que très partiellement dans les voies métaboliques et se retrouve en quasi totalité dans les urines et fèces.

Par contre, notre souci est d'exploiter la bétaïne car cette dernière constitue un agent émulsifiant intéressant.

Dans le système d'unité d'alimentation rationnée français, la valeur énergétique des aliments pour animaux s'exprime en unité fourragère pour les ruminants ou en kilo calories pour les monogastriques.

La concentration énergétique insuffisante des co-produits de fermentation (0,5 - 0,7 UF / Kg de produit brut), du fait de la faible teneur en matières organiques contenues, ne permet pas d'obtenir un produit alimentaire hautement performant correspondant aux exigences actuelles.

L'éleveur dispose très souvent de produits dits de lest, c'est-à-dire de moindre valeur alimentaire. A ces produits de lest, il faut ajouter des produits complémentaires riches qui permettent de nourrir correctement l'animal et, ainsi, d'obtenir les performances souhaitées.

Les co-produits de fermentation ne contiennent qu'une très faible teneur en matières grasses et une faible teneur en sucres simples. Les matières grasses sont difficiles d'emploi. D'une part, un grand nombre de corps gras et, plus spécialement, les corps gras saturés sont solides à température ambiante ce qui contraint l'utilisateur à disposer d'un dispositif de chauffage. D'autre part, le mélange des matières grasses est délicat car, pour respecter les proportions nécessaires, il convient de s'équiper d'un système de dosage. Ainsi, l'utilisation de matières grasses constitue une contrainte chez l'industriel de l'alimentation animale et, surtout, chez l'éleveur-fabricant.

De plus, il est à souligner que le mélange risque d'être inappétent, c'est-à-dire difficile à faire ingérer par l'animal qui n'en apprécie pas le goût, les matières grasses étant souvent inappétentes. Elles nécessitent, dans ce cas, des correcteurs de goût, la mélasse très appétente peut remplir cet objet.

- 4 -

0253705

Le but principal de la présente invention est de préparer, grâce à la bétaïne contenue dans le co-produit de fermentation de mélasse qui sert d'émulsifant, un liquide manipulable aisément, stable, riche en énergie par la matière grasse additionnelle.

Cette émulsion peut être complétée par :
- des mélasses de canne, de betteraves ou d'autres origines, ce qui confère appétence et viscosité au produit ;
- des compléments minéraux vitaminisés adaptés en fonction des matières premières de base de la ration pour aboutir, à partir d'une solution simple, à un aliment complet et rationnel ;
- d'autres composés tels que des sels, de l'urée et autres médicaments. Cette liste étant non limitative, ceci en vue de répondre aux besoins du plus grand nombre.

Ainsi préparée, la solution peut avoir son intérêt :
- dans les deux grands types d'alimentation par voie sèche et humide ;
- chez les deux grands producteurs d'aliments pour animaux qui sont :
l'industriel de l'alimentation et l'éleveur-fabricant.

A titre d'exemples :

Un essai a été pratiqué dans une importante coopérative fabriquant des aliments composés. Les premiers résultats sont :
- la baisse du prix de l'aliment fini ;
- un meilleur rendement à la presse lors de la formation des granulés d'aliment
- une odeur agréable du produit fini ;
- une dureté très correcte du granulé ce qui limite les pertes dues aux fines ;
- une bonne appétence et de bons résultats zootechniques.

Un autre test est actuellement en cours au sein de l'I.N.R.A. (Institut National de la Recherche Agronomique).

L'objet de cette recherche est de permettre de nourrir les moutons dans la garrigue méditerranéenne très simplement avec l'herbe complétée par notre liquide.

Cette forme d'alimentation présente le double avantage d'autoriser une alimentation simple et économiquement rentable, ce qui devrait permettre de relancer l'élevage en garrigue et de limiter ainsi l'extension de la jachère qui est en grande partie la cause de nombreux incendies en été.

Ce composé pour l'alimentation animale obtenu par mise en oeuvre de notre procédé est caractérisé par le fait qu'il est formé :
- d'un co-produit de fermentation issu de matières organiques de betteraves,
- de matières grasses végétales ou animales,

- 5 -

0253705

avec possibilités d'incorporation de mélasses, de compléments minéraux vitaminés et d'autres composés utilisés en alimentation animale.

Les co-produits de fermentation contiennent une forte proportion de matières azotées qui peut représenter actuellement de 20 à 53 % pour des concentrations normales du produit.

L'ajout de matières grasses permet d'augmenter sensiblement la valeur énergétique, le choix de ces dernières étant fonction des principes zootechniques de l'animal à nourrir.

La mélasse, qui apporte sucre et appétence, permet dans certains cas de stabiliser la viscosité du mélange.

D'autres compléments alimentaires nécessaires aux bons résultats peuvent être incorporer à l'aliment.

EXEMPLE A TITRE ILLUSTRATIF DE

FABRICATION DE 20 TONNES DE COMPOSE LIQUIDE ENERGETIQUE DENOMME CALORILIC* S20

************************************************************************

1) Remplissage de 7,800 t. du co-produit liquide de fermentation déminéralisé contenant de l'ordre de 17 % de Bétaïne (sur poids brut) - Densité du co-produit : 1,3.

2) Chauffage du co-produit à 60°C.

3) Incorporation de 4 t. de Suif (Qualité : 2 - 4 % d'acidité oléique - Point de fusion : 42°C - Densité : 0,88), par pompage à 70°C.

4) Simultanément à cette incorporation et durant 15 minutes complémentaires, brassage intensif pour obtenir une émulsion complète.

5) Incorporation de 7,800 t. de Mélasse de Betterave à 20°C (Densité : 1,38), en maintenant le brassage.

6) Arrêt du brassage au bout de 10 minutes.

Le mélange est alors à une température voisine de 40°C.

7) On laisse refroidir le mélange ainsi obtenu jusqu'à température ambiante.

8) Au moyen d'un viscosimètre Brookfield, on effectue une mesure de viscosité.

Si besoin, on ajustera la viscosité à la baisse en additionnant de faibles quantités d'eau (1 à 3 %), ceci pour permettre une manipulation plus aisée.

_°_°_

* CALORILIC : Marque déposée en France, numéro de dépôt : 4538.

- 7 -

ESTIMATION DE LA VALEUR ALIMENTAIRE DES CALORILIC S20 ET H20
*******************************************************

| CARACTERISTIQUES (p.100 de produit brut) | Mélasse de Betterave | Protéinal | Vinasse Ordinaire | Suif | Huile Végétale | CALORILIC S20 40% Mélasse 40% Protéinal 20% Suif | CALORILIC H20 40% Mélasse 40% Vinasse 20% Huile Végétale |
|---|---|---|---|---|---|---|---|
| Matière Sèche | 77 | 74 | 70 | 99 | 99 | 80 | 75 |
| Energie brute (Kcal/kg) | 2 990 | 3 140 | 2 140 | 9 410 | 9 450 | 4 330 | 3 500 |
| Extractif non azoté | 60,0 | 33 | 29,2 | | | 57 | 36 |
| - Sucres | 48,5 | 6,4 | 2,7 | | | 22 | 22 |
| Matière Grasse | 0,3 | | | 98,3 | 98,7 | 20 | 20 |
| Cellulose brute | 0,3 | | | | | - | - |
| Protéines brutes | 7,7 | 52 | 23,0 | | | 24 | 13 |
| - Lysine | 0,04 | 0,28 | 0,11 | | | 0,13 | 0,06 |
| - Méthionine | 0,05 | 0,14 | 0,09 | | | 0,07 | 0,06 |
| - Méthionine + Cystine | 0,10 | 0,28 | 0,17 | | | 0,15 | 0,10 |
| - Tryptophane | 0,10 | | | | | - | - |
| - Thréonine | 0,06 | 0,09 | 0,15 | | | 0,06 | 0,08 |
| - Glycine + Sérine | 0,36 | 0,66 | 0,55 | | | 0,4 | 0,36 |
| - Leucine | 0,22 | 0,47 | 0,17 | | | 0,27 | 0,15 |
| - Isoleucine | 0,23 | 0,38 | 0,09 | | | 0,24 | 0,12 |
| - Valine | 0,17 | 0,70 | 0,20 | | | 0,34 | 0,14 |
| - Histidine | 0,00 | 0,09 | 0,21 | | | - | 0,08 |
| - Arginine | 0,02 | 0,19 | 0,09 | | | 0,07 | 0,04 |
| - Phénylalanine + Tyrosine | 0,34 | 0,33 | 0,29 | | | 0,27 | 0,25 |
| - Azote ammoniacal | | 3,5 | | | | 1,4 | - |
| Cendres brutes | 8,93 | 4,10 | 17,80 | | | 5,2 | 10 |
| - Calcium | 0,25 | 0,03 | 0,46 | | | 0,1 | 0,28 |
| - Phosphore total | 0,02 | 0,12 | 0,13 | | | 0,05 | 0,06 |
| - Sodium | 1,00 | 0,90 | 2,11 | | | 0,7 | 1,24 |
| - Potassium | 4,00 | 0,15 | 4,58 | | | 1,6 | 3,43 |
| - Chlore | 1,30 | 1,10 | | | | 0,96 | |
| - Magnésium | 0,03-0,25 | 0,30 | 0,02 | | | - | |
| **PORCS** | | | | | | | |
| Energie digestible (Kcal/kg) | 2 600 | 2 400 | 1 100 | 7 500 | 8 060 | 3 500 | 3 092 |
| Energie métabolisable (Kcal/kg) | 2 530 | 2 165 | 1 015 | 7 500 | 8 060 | 3 378 | 3 030 |
| CUDa des protéines | 85 | 65 | 45 | - | - | - | - |
| **BOVINS** | | | | | | | |
| Energie nette (UF/kg) | 0,70 | 0,79 | 0,55 | 3,10 | 3,10 | 1,22 | 1,12 |
| P D I N (g/kg) | 45 | 320 | 162 | - | - | 146 | 82 |
| P D I E | 47 | 135 | 128 | - | - | 73 | 70 |

REVENDICATIONS

**************************

I - Procédé de fabrication d'aliments pour animaux caractérisé en ce qu'il constitue à mélanger un produit de base contenant de la bétaïne formé par le co-produit de fermentation de mélasses de betteraves avec de la matière grasse et à émulsifier ce mélange par simple brassage, le taux de matière grasse allant jusqu'à 50 % du produit final en poids de matière grasse et, éventuellement, en chauffant selon le type de matière grasse, et à stabiliser l'émulsion obtenue par adjonction de mélasses et/ou d'agents viscosants du type gomme en vue d'augmenter la viscosité ou par adjonction d'eau en vue de diminuer cette dernière.

II - Procédé selon la revendication 1 caractérisé en ce que l'on améliore l'appétence de l'émulsion par la présence de sucre, d'acide glutamique ou d'autres constituants de produits de base utilisés.

III - Procédé selon la revendication 1 caractérisé en ce que l'on ajoute au produit de base, contenant de la bétaïne, de la matière grasse d'origine animale ou végétale.

_°_°_°_